# EUROPEAN PATENT SPECIFICATION

(11) **EP 3 720 152 B1**
(45) Date of publication and mention of the grant of the patent: **27.10.2021**
(21) Application number: 19166527.2
(22) Date of filing: 01.04.2019
(51) Int. Cl.: H04W 4/02, H04L 29/06, H04W 12/00, H04W 12/069, H04W 12/61, H04W 12/63, H04W 60/00, H04W 36/00

(54) **COMMUNICATION NETWORK COMPONENTS AND METHODS FOR INITIATING A SLICE-SPECIFIC AUTHENTICATION AND AUTHORIZATION**
KOMMUNIKATIONSNETZWERKKOMPONENTEN UND VERFAHREN ZUR INITIIERUNG EINER SLICE-SPEZIFISCHEN AUTHENTIFIZIERUNG UND AUTORISIERUNG
COMPOSANTS ET PROCÉDÉS DE RÉSEAU DE COMMUNICATION PERMETTANT D'INITIER UNE AUTHENTIFICATION ET UNE AUTORISATION SPÉCIFIQUES À UNE TRANCHE

(43) Date of publication of application: 07.10.2020
(73) Proprietor: NTT DOCOMO, INC., Chiyoda-ku Tokyo 100-6150 (JP)
(72) Inventor: THAKOLSRI, Srisakul, 80687 Munich (DE); SAMA, Malla Reddy, 80687 Munich (DE)
(74) Representative: Viering, Jentschura & Partner mbB Patent- und Rechtsanwälte

(56) References cited:
- US-A1- 2017 318 450
- US-A1- 2018 242 198
- NOKIA ET AL: "Introduction of Network Slice-Specific Secondary authentication", 3GPP DRAFT; S2-1902881 WAS S2-1902754 WAS S2-1901674 23.501 CR SECONDARY NSSAI_V1+MARIO+QC_GV, 3RD GENERATION PARTNERSHIP PROJECT (3GPP), MOBILE COMPETENCE CENTRE ; 650, ROUTE DES LUCIOLES ; F-06921 S , vol. SA WG2, no. Tenerife, Spain; 20190225 - 20190301 1 March 2019 (2019-03-01), XP051611253, Retrieved from the Internet: URL:http://www.3gpp.org/ftp/tsg%5Fsa/WG2%5 FArch/TSGS2%5F131%5FTenerife/Docs/S2%2D190 2881%2Ezip [retrieved on 2019-03-01]

## Description

The present disclosure relates to communication network components and methods for initiating a slice-specific authentication and authorization.

In a mobile communication network, after a (primary) authentication and authorization of a mobile terminal has been carried out, in which it is verified whether the mobile terminal is allowed to access the mobile communication network, which includes both radio access network and core network in general, a slice-specific (secondary) authentication and authorization may be carried out. In this secondary authentication and authorization, it is verified that the mobile terminal may access a specific core network slice of the core network the mobile terminal has requested. When the slice-specific authentication and authorization has been successful for a core network slice, an indication of this fact may be stored as a part of the mobile terminal's context in one of network entity in the core network, such that it is not necessary to perform a slice-specific authentication and authorization again for the core network slice, e.g. in case of a re-registration after a handover of the mobile terminal.

However, there are use cases when it is desirable that a slice-specific authentication and authorization for a core network slice is performed again, i.e. that a secondary re-authentication and re-authorization is performed for a core network slice, even when the mobile terminal was successfully authenticated and authorized for accessing the network slice.

US 2017/318450 A1 discloses apparatus and methods for mobility management of mobile devices among multiple network slices, wherein one of the slices may be considered a primary slice, and other slices may be considered secondary slices. Additionally, D1 discloses a determination on whether to register the mobile device to the slices wherein such determination may trigger a re-registration of the mobile device to the primary slice.

US 2018/242198 A1 discloses a mobile communication network system includes a default network slice; at least one core network slice added according to a supporting service which may include a slice registration process.

NOKIA ET AL: "Introduction Of Network Slice-Specific secondary authentication" , 3GPP DRAFT; S2-19028B1 WAS S2-1902754; 23.501 CR SECONDARY 3RD GENERATION PARTNERSHIP PROJECT (3GPP), MOBILE COMPETENCE CENTRE; 650, ROUTE DES LUCIOLES ; F-06921 S; vol. SA WG2, no. Tenerife, Spain; 20190225 - 20190301 1 March 2019 (2019-03-01)) is related to aspects of Network Slice-specific secondary authentication.

Accordingly, approaches which allow a more flexible performing of secondary authentication and authorization, in particular secondary re-authentication and re-authorization, are desirable. According to an aspect of the present invention, a mobile communication network component is provided including the features according to claim 1. Additional features for advantageous embodiments of the invention are provided in the dependent claims.

According to another aspect of the present invention, a method for initiating a slice-specific re-authentication and re-authorization including the features according to claim 9 is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile communication system.
- Figure 2: shows a communication arrangement illustrating a handover or registration for mobility of a mobile terminal from a first registration area to a second registration area of a communication network (PLMN).
- Figure 3: shows a message flow diagram illustrating a registration procedure according to an embodiment.
- Figure 4: illustrates information contained in the subscription information of a mobile terminal according to an embodiment.
- Figure 5: shows a message flow diagram illustrating a UE (User Equipment) subscription retrieval by an AMF (Access and Mobility Management Function) in course of a registration procedure.
- Figure 6: shows a message flow diagram illustrating a UE subscription retrieval by an AMF in course of a registration procedure with AMF re-allocation.
- Figure 7: shows a mobile communication network component according to an embodiment.
- Figure 8: shows a mobile communication network component according to another embodiment.
- Figure 9: shows a flow diagram illustrating a method for initiating a slice-specific re-authentication and reauthorization.
- Figure 10: shows a flow diagram illustrating a method for initiating a slice-specific authentication and authorization.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various embodiments provide methods and apparatus for initiating a slice-specific authentication and authorization. The invention is defined by the appended independent claims.

A mobile communication network component including a memory configured to store information indicating whether network slice-specific re-authentication and re-authorization is to be performed for a mobile terminal, a determiner configured to determine, based on the stored information, whether for a mobile terminal a network slice-specific re-authentication and re-authorization is to be performed and a controller configured to initiate a network slice-specific re-authentication and re-authorization if the determiner determines that a network slice-specific re-authentication and re-authorization is to be performed. For example, the information may be reconfigurable by an operator of mobile communication network (to which the mobile communication network component belongs) or a third party. Further, wherein the determiner is configured determine whether slice-specific re-authentication and re-authorization is to be performed for the mobile terminal based on a location of the mobile terminal. For this, the mobile communication network component may obtain the location of the mobile terminal by means of a location reporting service. For example, the mobile communication network component may subscribe to a location reporting service to obtain the mobile terminal's location. The features mentioned in this paragraph provide a first example.

By way of example, the mobile communication network component, including a transmitter configured to request the information from a database, in particular a Unified Data Management. The features mentioned in this paragraph in combination with the first example provide a second example.

By way of example, the mobile communication network component, wherein the database stores subscription information including the information. The features mentioned in this paragraph in combination with the second example provide a third example.

By way of example, the mobile communication network component, wherein the transmitter is configured to requesting subscription information of the mobile terminal and extracting the information from the subscription information. The features mentioned in this paragraph in combination with the second or third example provide a fourth example.

By way of example, is the mobile communication network component configured to implement a network function of a mobile communication network. The features mentioned in this paragraph in combination with any one of the first to fourth examples provide a fifth example.

By way of example, is the mobile communication network component being implemented by a server computer of the communication network, in particular an Access and Mobility Management Function or an authentication and authorization server or Authentication and authorization Server Function. The features mentioned in this paragraph in combination with the fifth example provide a sixth example.

By way of example, is the mobile communication network component wherein the information whether for a mobile terminal network slice-specific re-authentication and re-authorization is to be performed specifies whether for the mobile terminal network slice-specific re-authentication and re-authorization is to be performed dependent on location. The features mentioned in this paragraph in combination with any one of the first to sixth examples provide a seventh example.

By way of example, is the mobile communication network component wherein the information includes a list of locations where slice-specific re-authentication and re-authorization is to be performed for the mobile terminal and/or a list of locations where slice-specific re-authentication and re-authorization is not to be performed for the mobile terminal. The features mentioned in this paragraph in combination with any one of the first to seventh examples provide a eighth example.

By way of example, the mobile communication network component wherein the information whether for a mobile terminal slice-specific re-authentication and re-authorization is to be performed specifies whether for the mobile terminal slice-specific re-authentication and re-authorization is to be performed dependent on time. The features mentioned in this paragraph in combination with any one of the first to eighth examples provide a ninth example.

By way of example, the mobile communication network component wherein the determiner is configured determine whether slice-specific re-authentication and re-authorization is to be performed for the mobile terminal based on a time. The features mentioned in this paragraph in combination with any one of the first to ninth examples provide a tenth example.

By way of example, the mobile communication network component wherein the network slice-specific re-authentication and re-authorization is an authentication and authorization of the mobile terminal regarding the right to access a slice requested by the mobile terminal. The features mentioned in this paragraph in combination with any one of the first to tenth examples provide a eleventh example.

By way of example, the mobile communication network component wherein the mobile communication network component is part of a mobile communication network in which the mobile terminal has a status of being authenticated according to a network slice-specific authentication and authorization for a core network slice of the mobile communication network and wherein the network slice-specific re-authentication and re-authorization is a re-authentication and re-authorization for the core network slice. The features mentioned in this paragraph in combination with any one of the first to eleventh examples provide a twelfth example.

By way of example, the mobile communication network component wherein the mobile communication network component includes a transmitter and initiating the network slice-specific re-authentication and re-authorization includes transmitting a request message to perform network slice-specific authentication and authorization to an authentication and authorization server by means of the transmitter. The features mentioned in this paragraph in combination with any one of the first to eleventh examples provide a thirteenth example.

A method for initiating a network slice-specific re-authentication and re-authorization including storing information indicating whether network slice-specific re-authentication and re-authorization is to be performed for a mobile terminal, determining, based on the stored information, whether for a mobile terminal a network slice-specific re-authentication and re-authorization is to be performed; and initiating a network slice-specific re-authentication and re-authorization if it has been determined that a network slice-specific re-authentication and re-authorization is to be performed. For example, the information may be reconfigurable by an operator of mobile communication network (to which the mobile communication network component belongs) or a third party. The method may also include determining whether slice-specific re-authentication and re-authorization is to be performed for the mobile terminal based on a location of the mobile terminal. For this, the method may include obtaining the location of the mobile terminal by means of a location reporting service. For example, the method may include subscribing to a location reporting service to obtain the mobile terminal's location. The features mentioned in this paragraph provide a fourteenth example.

By way of example, the method including requesting the information from a database, in particular a Unified Data Management. The features mentioned in this paragraph in combination with the fourteenth example provide a fifteenth example.

By way of example, the method wherein the database stores subscription information including the information. The features mentioned in this paragraph in combination with the fifteenth example provide a sixteenth example.

By way of example, the method, including requesting subscription information of the mobile terminal and extracting the information from the subscription information. The features mentioned in this paragraph in combination with the fifteenth or sixteenth example provide a seventeenth example.

By way of example, the method performed by a communication network component implementing a network function of a mobile communication network. The features mentioned in this paragraph in combination with any one of the fourteenth to seventeenth examples provide a eighteenth example.

By way of example, the method performed by a server computer of the communication network, in particular an Access and Mobility Management Function or an authentication and authorization server or Authentication and authorization Server Function. The features mentioned in this paragraph in combination with the eighteenth example provide a nineteenth example.

By way of example, the method wherein the information whether for a mobile terminal slice-specific re-authentication and re-authorization is to be performed specifies whether for the mobile terminal slice-specific re-authentication and re-authorization is to be performed dependent on location. The features mentioned in this paragraph in combination with any one of the fourteenth to nineteenth examples provide a twentieth example.

By way of example, the method wherein the information includes a list of locations where slice-specific re-authentication and re-authorization is to be performed for the mobile terminal and/or a list of locations where slice-specific re-authentication and re-authorization is not to be performed for the mobile terminal. The features mentioned in this paragraph in combination with any one of the fourteenth to twentieth examples provide a twenty-first example.

By way of example, the method wherein the information whether for a mobile terminal slice-specific re-authentication and re-authorization is to be performed specifies whether for the mobile terminal slice-specific re-authentication and re-authorization is to be performed dependent on time. The features mentioned in this paragraph in combination with any one of the fourteenth to twenty-first examples provide a twenty-second example.

By way of example, the method including determining whether network slice-specific re-authentication and re-authorization is to be performed for the mobile terminal based on a time. The features mentioned in this paragraph in combination with any one of the fourteenth to twenty-second examples provide a twenty-third example.

By way of example, the method wherein the network slice-specific re-authentication and re-authorization is an authentication and authorization of the mobile terminal regarding the right to access a slice requested by the mobile terminal. The features mentioned in this paragraph in combination with any one of the fourteenth to twenty-third examples provide a twenty-fourth example.

By way of example, the method performed by a communication network component which is part of a mobile communication network in which the mobile terminal has a status of being authenticated according to a network slice-specific authentication and authorization for a core network slice of the mobile communication network and wherein the network slice-specific re-authentication and re-authorization is a re-authentication and re-authorization for the core network slice.

The features mentioned in this paragraph in combination with any one of the fourteenth to twenty-fourth examples provide a twenty-fifth example.

By way of example, the method wherein initiating the network slice-specific re-authentication and re-authorization includes transmitting a request message to perform network slice-specific authentication and authorization to an authentication and authorization server. The features mentioned in this paragraph in combination with any one of the fourteenth to twenty-fifth examples provide a twenty-sixth example.

A mobile communication network component including a memory configured to store information indicating whether for a mobile terminal network slice-specific authentication and authorization is to be performed, wherein the information specifies a dependency on location and/or time of whether a network slice-specific authentication and authorization is to be performed for the mobile terminal, a determiner configured to determine whether for a mobile terminal a network slice-specific authentication and authorization is to be performed based on the stored information and a controller configured to initiate a network slice-specific authentication and authorization if the determiner determines that a network slice-specific authentication and authorization is to be performed. For example, the information may be reconfigurable by an operator of mobile communication network (to which the mobile communication network component belongs) or a third party. Further, wherein the determiner is configured determine whether slice-specific authentication and authorization is to be performed for the mobile terminal based on a location of the mobile terminal. For this, the mobile communication network component may obtain the location of the mobile terminal by means of a location reporting service. For example, the mobile communication network component may subscribe to a location reporting service to obtain the mobile terminal's location. The features mentioned in this paragraph provide a twenty-seventh example.

By way of example, the mobile communication network component including a transmitter configured to request the information from a database, in particular a Unified Data Management. The features mentioned in this paragraph in combination with the twenty-seventh example provide a twenty-eighth example.

By way of example, the mobile communication network component wherein the database stores subscription information including the information. The features mentioned in this paragraph in combination with the twenty-eight example provide a twenty-ninth example.

By way of example, the mobile communication network component wherein the transmitter is configured to requesting subscription information of the mobile terminal and extracting the information from the subscription information. The features mentioned in this paragraph in combination with the twenty-eighth or twenty-ninth provide a thirtieth example.

By way of example, the mobile communication network component configured to implement a network function of a mobile communication network. The features mentioned in this paragraph in combination with the twenty-seventh to thirtieth examples provide a thirty-first example.

By way of example, the mobile communication network component being implemented by a server computer of the communication network, in particular an Access and Mobility Management Function or an authentication and authorization server or Authentication and authorization Server Function. The features mentioned in this paragraph in combination with the thirty-first example provide a thirty-second example.

By way of example, the mobile communication network component wherein the information includes a list of locations where slice-specific authentication and authorization is to be performed for the mobile terminal and/or a list of locations where slice-specific authentication and authorization is not to be performed for the mobile terminal. The features mentioned in this paragraph in combination with any one of the twenty-seventh to thirty-second examples provide a thirty-third example.

By way of example, the mobile communication network component wherein the determiner is configured determine whether network slice-specific authentication and authorization is to be performed for the mobile terminal based on a time. The features mentioned in this paragraph in combination with any one of the twenty-seventh to thirty-third examples provide a thirty-fourth example.

By way of example, the mobile communication network component wherein the network slice-specific authentication and authorization is an authentication and authorization of the mobile terminal regarding the right to access a slice requested by the mobile terminal. The features mentioned in this paragraph in combination with any one of the twenty-seventh to thirty-fourth examples provide a thirty-fifth example.

By way of example, the mobile communication network component wherein the mobile communication network component includes a transmitter and initiating the network slice-specific authentication and authorization includes transmitting a request message to perform network slice-specific authentication and authorization to an authentication and authorization server by means of the transmitter. The features mentioned in this paragraph in combination with any one of the twenty-seventh to thirty-fifth examples provide a thirty-sixth example.

A method for initiating a network slice-specific authentication and authorization including storing information indicating whether for a mobile terminal network slice-specific authentication and authorization is to be performed, wherein the information specifies a dependency on location and/or time of whether a network slice-specific authentication and authorization is to be performed for the mobile terminal, determining whether for a mobile terminal a network slice-specific authentication and authorization is to be performed based on the stored information and initiating a network slice-specific authentication and authorization if it has been determined that a network slice-specific authentication and authorization is to be performed. For example, the information may be reconfigurable by an operator of mobile communication network (to which the mobile communication network component belongs) or a third party. Further, whether slice-specific authentication and authorization is to be performed for the mobile terminal based on a location of the mobile terminal. For this, the method may include obtaining the location of the mobile terminal by means of a location reporting service. For example, the method may include subscribing to a location reporting service to obtain the mobile terminal's location. The features mentioned in this paragraph provide a thirty-seventh example.

By way of example, the method including requesting the information from a database, in particular a Unified Data Management. The features mentioned in this paragraph in combination with the thirty-seventh example provide a thirty-eighth example.

By way of example, the method wherein the database stores subscription information including the information. The features mentioned in this paragraph in combination with the thirty-eighth example provide a thirty-ninth example.

By way of example, the method including requesting subscription information of the mobile terminal and extracting the information from the subscription information. The features mentioned in this paragraph in combination with the thirty-eighth or thirty-ninth example provide a fortieth example.

By way of example, the method performed by a communication network component implementing a network function of a mobile communication network. The features mentioned in this paragraph in combination with any one of the thirty-seventh to fortieth example provide a forty-first example.

By way of example, the method performed by a server computer of the communication network, in particular an Access and Mobility Management Function or an authentication and authorization server or Authentication and authorization Server Function. The features mentioned in this paragraph in combination with the forty-first example provide a forty-second example.

By way of example, the method wherein the information includes a list of locations where slice-specific authentication and authorization is to be performed for the mobile terminal and/or a list of locations where slice-specific authentication and authorization is not to be performed for the mobile terminal. The features mentioned in this paragraph in combination with any one of the thirty-sixth to forty-second examples provide a forty-third example.

By way of example, the method including determining whether network slice-specific authentication and authorization is to be performed for the mobile terminal based on a time. The features mentioned in this paragraph in combination with any one of the thirty-seventh to forty-third examples provide a forty-fourth example.

By way of example, the method wherein the network slice-specific authentication and authorization is an authentication and authorization of the mobile terminal regarding the right to access a slice requested by the mobile terminal. The features mentioned in this paragraph in combination with any one of the thirty-seventh to forty-fourth examples provide a forty-fifth example.

By way of example, the method wherein initiating the network slice-specific authentication and authorization includes transmitting a request message to perform network slice-specific authentication and authorization to an authentication and authorization server. The features mentioned in this paragraph in combination with any one of the thirty-seventh to forty-fifth examples provide a forty-sixth example.

It should be noted that one or more of the features of any of the examples above may be combined with any one of the other examples.

In the following, various examples will be described in more detail.

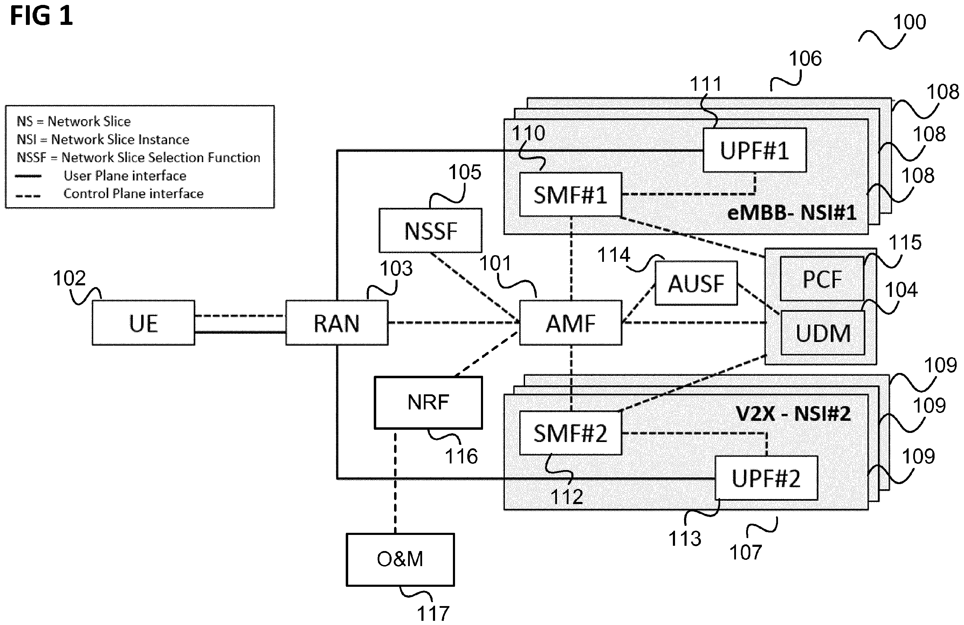

Figure 1 shows a mobile communication system 100.

The mobile communication system 100 includes a mobile radio terminal device 102 such as a UE (user equipment), a nano equipment (NE), and the like. The mobile radio terminal device 102, also referred to as subscriber terminal, forms the terminal side while the other components of the mobile communication system 100 described in the following are part of the mobile communication network side, i.e. part of a mobile communication network (e.g. a Public Land Mobile network - PLMN).

Furthermore, the mobile communication system 100 includes a radio access network 103, which may include a plurality of radio access network nodes, i.e. base stations configured to provide radio access in accordance with a 5G (Fifth Generation) radio access technology (5G New Radio). It should be noted that the mobile communication system 100 may also be configured in accordance with LTE (Long Term Evolution) or Wi-Fi (radio wireless local area networking) or another mobile communication standard but 5G is herein used as an example. Each radio access network node may provide a radio communication with the mobile radio terminal device 102 over an air interface. It should be noted that the radio access network 103 may include any number of radio access network nodes.

The mobile communication system 100 further includes a core network including an Access and Mobility Management Function (AMF) 101 connected to the RAN 103, a Unified Data Management (UDM) 104 and a network slice Selection Function (NSSF) 105. Here and in the following examples, the UDM may further consist of the actual UE's subscription database, which is known as, for example, the UDR (Unified Data Repository). The core network further includes an AUSF (Authentication and Authorization Server Function) 114 and a PCF (Policy Control Function) 115.

The core network of the mobile communication system 100 further includes a network repository function 116 to which (at least) the AMF 101 is connected.

The mobile communication system 100 may further include an O&M (Operations and Maintenance) system 117 connected to (at least) the NRF 116. The O&M system 117 may for example correspond to an OSS/BSS System (Operations Support System/ Business Support System) including for example a Service Management Function (SerMF) and a network slice Management Function (NSMF).

The core network may have multiple (core) network slices 106, 107 and for each network slice 106, 107, the operator may create multiple network slice instances (NSIs) 108, 109. In this example, the core network includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in this example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

An S-NSSAI (Single network slice Selection Assistance information) identifies a network slice and is included of:
- A Slice/Service type (SST), which refers to the expected network slice behaviour in terms of features and services;
- A Slice Differentiator (SD) which is optional information that complements the slice/service type(s) to differentiate amongst multiple network slices of the same slice/service type.

NSSAI may include one or more S-NSSAIs.

Allowed NSSAI is NSSAI provided by the serving PLMN (Public Land Mobile network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration.

A user of a mobile terminal 102 typically has a subscription for a certain communication network, i.e. a contract with an operator of a communication network (e.g. corresponding to the network side of the communication system 100, i.e. the communication system 100 without the UE 102). That communication network is his home network, e.g. HPLMN (Home Public Land Mobile network).

When being out of the coverage area of his home network, a user may use a communication network of a different operator, for example when he/she is in another country than his/her home country, which then acts as visited network for the user. Or within a country, he/she is connected to another PLMN then the subscribed PLMN.

When a mobile terminal being served by or camping on a communication network leaves the coverage area of the communication network or a registration area of the communication network, a handover or registration of mobility (reselection) of the mobile terminal to another communication network or another registration area of the same network may be performed.

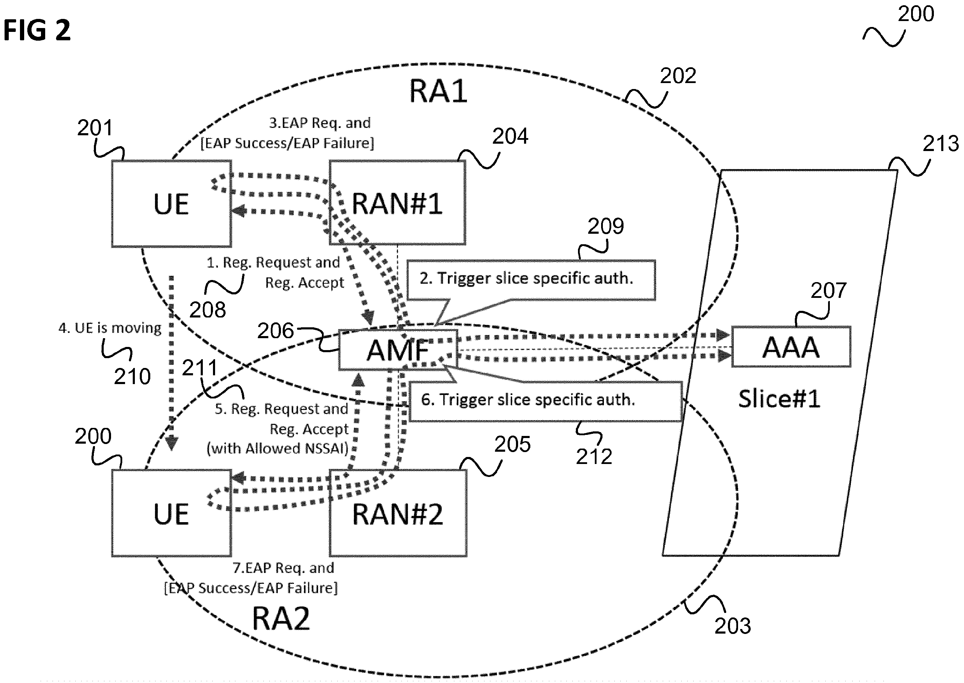

Figure 2 shows a communication arrangement 200 illustrating a handover or registration for mobility of a mobile terminal 201 from a first registration area 202 to a second registration area 203 of a communication network (PLMN).

The first registration area 202 is operated by a first RAN 204 and the second registration area 203 is operated by a second RAN 205.

The RANs 204, 205 are connected to the same AMF 206. The AMF is connected to an AAA (Authentication and Authorization, Authorization and Accounting) server 207 of a core network slice 213.

It should be noted that the example here is for a handover or registration for mobility between registration areas of the same PLMN. However, the following may also be applicable to a handover or registration for mobility between different PLMNs. This means that the RANs 204, 205 may be of different PLMNs. In that case, there may by two AMFs of the different PLMNs which may share the mobile terminal's context.

In case of a handover, the mobile terminal 201 initially has a communication session via the first RAN 204. This means that the mobile terminal 201 has a communication session via the first RAN 204. After the handover, the mobile terminal 201 continues the communication session via the second RAN 205. This means that after the handover, the mobile terminal 201 has a communication session via the second RAN 205 continuing the previous communication session via the first RAN 204.

In case of a registration for mobility, the UE 201 is in idle mode and, before the registration for mobility, is camping on the first RAN 204 and after the registration for mobility the UE 201 is camping on the second 205.

As an example, assume that the mobile terminal 201 is turned on when being in the first registration area 202.

In 208, the mobile terminal 201 performs a registration procedure with the AMF 206 via the first RAN 204. This includes transmission of a registration request from the mobile terminal 201 to the AMF 206 and a transmission of a registration accept from the AMF 206 to the mobile terminal 201. Furthermore, this includes an authentication and authorization of the mobile terminal 201 which is also referred to as primary authentication and authorization of the mobile terminal 201. It may include checking whether the mobile terminal 201 has the right to access the first RAN 204 and the PLMN's core network.

3GPP (Third Generation Partnership Project) Release 16 5GS (Fifth Generation System) introduces a concept of network slice-specific authentication and authorization which is performed by a AAA server 207 either hosted by the PLMN (including registration areas 202, 203) or by a third party (Enterprise) having a business relationship with the PLMN's operator.

The slice-specific authentication and authorization is for simplicity also referred to as slice-specific authentication or secondary authentication and authorization or just secondary authentication (to distinguish it from the primary authentication and authorization of 208 mentioned above). The slice-specific authentication and authorization may include checking whether the mobile terminal 201 has the right to access a certain slice of the PLMN's core network.

Whether a slice-specific authentication and authorization is to be performed for a mobile terminal may be indicated in its subscription information. For example, the AMF 206 (e.g. corresponding to AMF 101) may retrieve the mobile terminal's subscription information from a UDM of the PLMN (e.g. corresponding to UDM 104).

For example, the mobile terminal's subscription information may contain, for each S-NSSAI, an indication whether the S-NSSAI is subject to network slice-specific secondary authentication and authorization.

Assuming that slice-specific secondary authentication and authorization is to be performed for the mobile terminal 201 the AMF 206 may indicate to the UE 201, in 209, that slice-specific secondary authentication and authorization will be executed. Then, the AMF 206 initiates the network slice-specific secondary authentication and authorization procedure for each S-NSSAI (included in the UE's requested NSSAI) that requires it. In the example of figure 2, where it is assumed that secondary authentication and authorization is required for the core network slice 213 (i.e. the S-NSSAI of the core network slice 213 is assumed to be included in the requested NSSAI of the UE 201), the AMF 206 in particular requests the UE 201 to perform secondary authentication and authorization of the UE 201 for the core network slice 213. For example, the AMF 206 requests the UE User ID for EAP authentication and authorization (EAP ID) for the S-NSSAI via a NAS MM Transport message including S-NSSAI. After that the UE 201 sends the EAP ID to the AAA server 207 via the AMF 206, and there are messages exchanged between the UE 201 and the AAA server 207. Once the network slice-specific authentication and authorization is done, the AAA server 207 either sends the authentication and authorization success or authentication and authorization failure message to the UE 201 via the AMF 206. It should be noted that the figure 2 is a simplified signalling flow. In fact, there could be one or more other network entities between the AMF 206 and the AAA server 207, e.g., the AUSF or the AAA proxy, which might be needed.

The AMF 206 may inform the UE 201 about the secondary authentication and authorization. It may for example send a notification of "pending slice-specific secondary authentication and authorization" to the UE 201 in the registration accept message it sends to the UE 201 at the end of the registration procedure (performed in 208). In response to the registration accept message, the UE sends a registration complete message, the UE 201 may inform the AMF 206 whether it supports the feature of secondary authentication and authorization. Alternatively, the UE may already indicate its support of secondary authentication and authorization in the Registration Request message 208. If that is the case, the AMF 206 performs the secondary authentication and authorization (based on the UE's subscription) after sending the registration accept to the UE.

After secondary authentication and authorization, the UE 201 is provided by the AMF 206 with a new Allowed NSSAI which also contains the S-NSSAIs subject to network slice-specific secondary authentication and authorization, and for which the secondary authentication and authorization has been successful.

The S-NSSAIs, for which secondary authentication and authorization was not successful are not included in the Allowed NSSAI and are included in a list of Rejected S-NSSAIs.

After performing network slice-specific secondary authentication and authorization, the UE context in the AMF 206 retains the authentication and authorization status for the UE 201 for the related specific S-NSSAI as long as the UE remains registered (e.g. "RM-REGISTERED") in the PLMN, so that the AMF is not required to execute a network slice-specific secondary authentication and authorization for a UE at every periodic or mobility registration procedure with the PLMN. The UE typically remains registered in the PLMN unless it is turned off (for a minimum time period).

In summary, the UE's subscription in UDM stores an information whether secondary authentication and authorization is needed for a particular slice. The AMF 206 retrieves this information from the UDM and performs the secondary authentication and authorization and conveys the results to the UE. Re-performing the secondary authentication and authorization is not necessary as the AMF stores the authentication and authorization status (i.e. that there was a successful secondary authentication and authorization) in the UE context.

It is assumed that in 210, the UE 201 moves to the second registration area 203.

In 211, the UE 201 performs a registration procedure via the second RAN 205.

As mentioned above, the AMF 206 may now use the existing UE authentication and authorization context and hence there may be no need to re-authenticate the UE 201.

However, in some cases, a re-authentication and re-authorization in the new registration area (second registration area 203 in this example) may be desirable. For example, this may be because of a service level agreement between the PLMN's operator and a third party (which is for example operating the AAA server 207). This means that it would be desirable that the AMF 206, in 212, triggers a secondary re-authentication and re-authorization similar to 209.

For example, the third party may have a business model with a certain policy mechanism per subscriber making secondary re-authentication and re-authorization desirable like that a slice-provided service should only be available in specific locations for specific UEs. For example, a low tariff subscriber should only have access to a service within a certain location (e.g. town) and if he moves out of this location the UE should be disconnected. Thus, a re-authentication and re-authorization should be required when moving out of the location. Further, it is possible that the third party does not wish to make its business model public to mobile operators. So, it may be desirable that the disconnection reason is transparent (not visible) to the PLMN's operator.

It should be noted that the AAA server 207 may also trigger a network slice-specific secondary re-authentication and re-authorization procedure wherein the AAA server 207 which triggers the AMF 206 to perform secondary re-authentication and re-authorization by request.

However, as mentioned above, it may be desirable that a secondary re-authentication and re-authorization is performed depending on location (e.g. when a user is leaving a town). Since the AAA server 207 usually does not know about the UE's location, it cannot trigger a secondary re-authentication and re-authorization based on location. In particular, the AAA server 207 is typically not aware that the UE 201 is moving out of a registration area for which the UE 201 has performed a secondary authentication and authorization earlier.

In view of the above, in the following, approaches are described for allowing a secondary authentication and authorization to be performed again when the a UE moves to another registration area. For example, secondary authentication and authorization may be performed again according to an SLA between the PLMN's operator and a third party (e.g. an enterprise).

In particular, according to various embodiments, re-authentication and re-authorization based on taking into account a new location of a UE to where the UE is moving for which a secondary authentication and authorization is desired (or needed) is supported. In other words, a location-based secondary re-authentication and re-authorization is provided. In general, a location-based secondary authentication and authorization may be provided.

The term "secondary authentication and authorization" should be understood to include the "first" secondary authentication and authorization after turning on the mobile terminal (i.e. without the mobile terminal's context in the AMF) as well as the secondary re-authentication and re-authorization (i.e. with mobile terminal's context in the AMF when the first secondary authentication and authorization has already been performed). In the context of figure 2, the first secondary authentication and authorization corresponds to 209 and the secondary re-authentication and re-authorization corresponds to 212. There may be more than one secondary re-authentication and re-authorization, e.g. when the UE 201 keeps moving to new registration areas (or also when it returns to a previously-visited registration area.

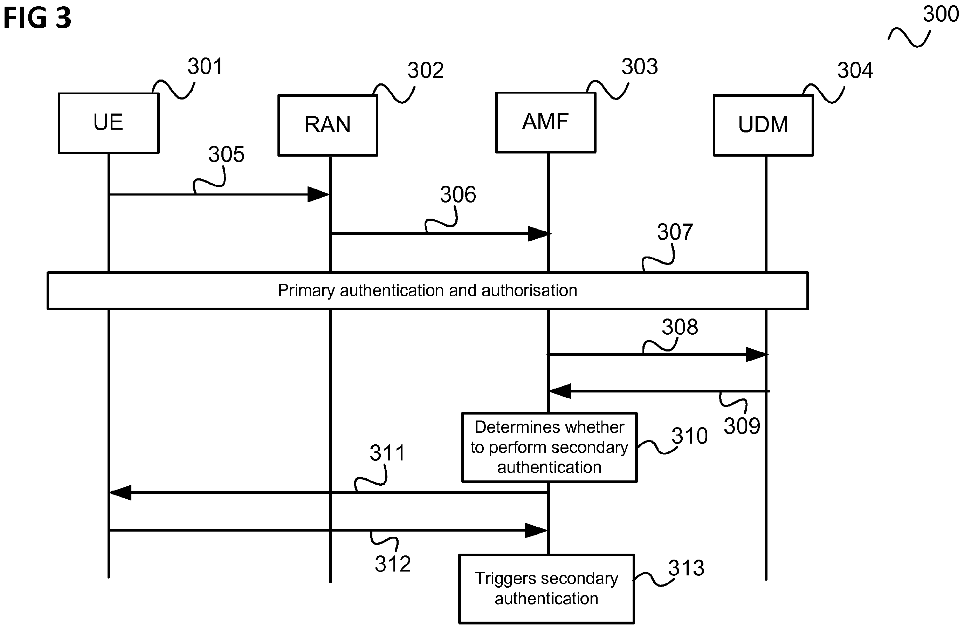

Figure 3 shows a message flow diagram 300 illustrating a registration procedure according to an embodiment.

The message flow 300 takes place between a UE 301, e.g. corresponding to UE 201, a RAN 302, e.g. corresponding to the second RAN 205, an AMF 303, e.g. corresponding to the AMF 206 and a UDM 304 of the PLMN to which the RAN 302 and the AMF 303 belong.

The UE 301 may relocate to the coverage area of the RAN 302 (e.g. by a handover or registration for mobility as described with reference to figure 2). Alternatively, the registration may be a registration after turning on the UE 301.

In 305, the UE 301 sends a registration request to the RAN 302 which the RAN 302 forwards to the AMF 303 in 306 (e.g. after performing AMF selection). In the example of figure 2, the AMF 206 for the RANs 204, 205 but the AMF 303 may also be an AMF different from the one that handled the UE 301 before the handover or registration for mobility. In case that the UE 301 has relocated and the AMF 303 is different from the one that handled the UE before the relocation the AMF 303 may obtain the UE's context from the AMF that handled the UE 301 before the handover or registration for mobility.

In 307, the AMF 303 performs primary authentication and authorization of the UE 201.

Afterwards, various operations related to registration of the UE 301 are carried out which are not all described here for simplicity.

They in particular include that the AMF 303 requests the UE's subscription profile from the UDM 304 in 308 which the UDM 304 provides in 309.

Based on the UE's subscription profile, the AMF 303 determines whether a secondary authentication and authorization is to be performed for the UE 301 in 310.

After all the operations related to registration are (successfully) completed the AMF 303 sends a registration accept message to the UE 301 in 311 to which the UE 301 responds in 312 with a registration complete message.

The AMF 303 may indicate in the registration accept message that there is a pending secondary authentication and authorization to perform if it has determined that a secondary authentication and authorization is to be performed for the UE 301.

The UE 301 may indicate in the registration request message whether it supports secondary authentication and authorization.

If the AMF 303 has determined that a secondary authentication and authorization is to be performed for the UE 301 and the UE 301 supports secondary authentication and authorization the AMF triggers secondary authentication and authorization of the UE 301 in 313.

It should be noted that the secondary authentication and authorization may be a "first" secondary authentication and authorization or a secondary re-authentication and re-authorization.

According to various embodiments, for the determination in 310, the AMF uses extended subscription information which it retrieves from the UDM 304 in 308 and 309.

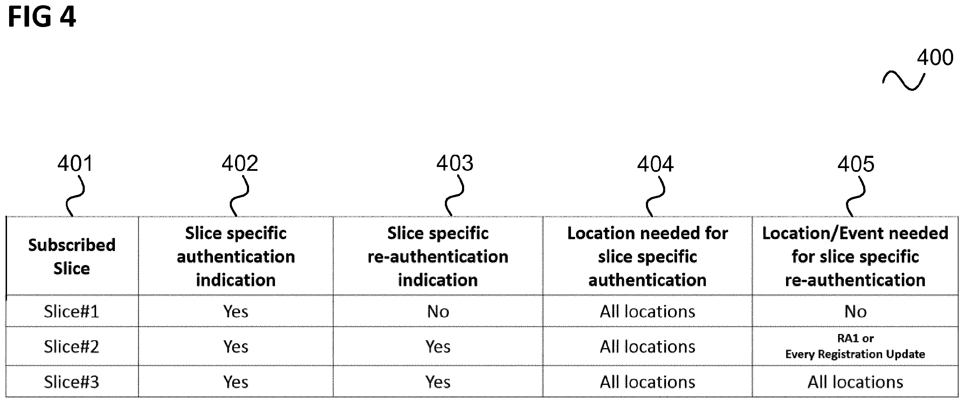

Figure 4 illustrates information 400 contained in the subscription information of a mobile terminal.

The information is for example part of the subscription information stored for the UE 301 in the UDM 304.

The information 400 can be seen as secondary authentication and authorization decision information and is represented in figure 4 in the form of a table. In the example of figure 4, it includes information for three network slices slice#1, slice#2 slice#3 but this is only a simple example and the secondary authentication and authorization decision information for a mobile terminal can include information for much more network slices.

The first column 401 indicates the network slices slice#1, slice#2 slice#3 which are network slices to which the UE (or its user) has subscribed.

In the second column 402, for each slice, it is indicated whether slice-specific authentication and authorization (i.e. a secondary authentication and authorization) is to be carried out for the respective slice.

In the third column 403, for each slice, it is indicated whether slice-specific re-authentication and re-authorization (i.e. a secondary re-authentication and re-authorization) is to be carried out for the respective slice.

In the fourth column 404, for each slice, it is indicated, whether slice-specific authentication and authorization is to be carried out (according to the second column 402), for which locations the slice-specific authentication and authorization is to be carried out.

It should be noted that columns 402 and 404 in this context refer to the first slice-specific authentication and authorization, i.e. they indicate whether a first slice-specific authentication and authorization is to be carried out (for a certain location).

In the fifth column 405, for each slice, it is indicated, whether slice-specific re-authentication and re-authorization is to be carried out (according to the third column 403), for which locations or under which circumstances (or events) the slice-specific re-authentication and re-authorization is to be carried out.

The entry in the third line of the fifth column 405 includes two alternatives are shown. This means that this entry may either, for example, be "RA1", i.e. re-authentication and re-authorization is to be performed when the UE enters registration area number 1, or it may be "Every Registration Update", i.e. re-authentication and re-authorization is to be performed for every registration update of the UE.

It should be noted that not all of the information of the second column 402, the third column 403, the fourth column 404 and the fifth column 405 need to be present. It is also possible to only provide subsets of these columns, e.g. only the third column 403 or only the second column 402 and the fourth column 404 or only the third column 403 and the fifth column 405.

As can be seen, the information 400 may in particular include parameters, i.e. indications, for triggering (or preventing) slice-specific re-authentication and re-authorization and/or location-based slice-specific (re-)authentication and (re-) authorization.

It should be noted that in alternative to having multiple parameters (e.g. in the form of flags like in the second column 402 and the third column 403), parameters may be used which can have a value from a larger range of values, such as a parameter according to:
- Parameter value = 1 indicates that secondary authentication and authorization is needed only once. If the AMF 303 already has an indication of a secondary authentication and authorization there is no need to perform secondary authentication and authorization again.
- Parameter value = 2 indicates that secondary authentication and authorization is needed whenever the UE 301 is moving to a new registration area and is accessing the respective slice, for which the UE has been authenticated and authorized earlier.

This parameter can be seen to combine the second column 302 and the third column 303 and further values may be defined for a parameter to combine multiple of the parameters indicated in figure 4.

As described with reference to figure 3, one or more of the parameters for triggering (or preventing) slice-specific re-authentication and re-authorization and/or location-based slice/event-based specific (re-)authentication and (re-)authorization may be conveyed to the AMF 306 during the registration procedure, when the AMF 306 retrieves the UE's subscription profile, e.g., via Nudm_SDM_Get.

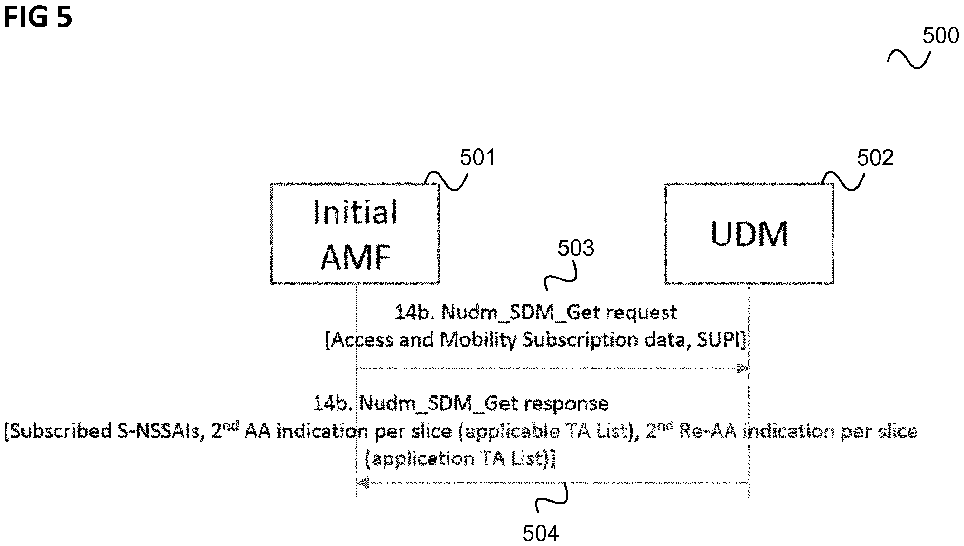

Figure 5 shows a message flow diagram 500 illustrating a UE subscription retrieval by an AMF in course of a registration procedure.

An AMF 501, e.g. corresponding to the AMF 303 of figure 3 and a UDM 502, e.g. corresponding to UDM 304 of figure 3, are involved in the message flow.

The AMF may be an initial AMF in a registration procedure, i.e. an AMF initially assigned to serve a UE to be registered.

In 503, the AMF 501 sends a Nudm_SDM_Get request message to the UDM 502. The request 503 includes Access and Mobility subscription data type as well as the UE's SUPI (Subscription Concealed Identifier).

In 504, the UDM 502 responds with a Nudm_SDM_Get response 504.

In the Nudm_SDM_Get response 504, the UDM 502 provides
- Subscribed S-NSSAIs (corresponding to the first column 401 of figure 4)
- Indication of slice-specific authentication and authorization per Subscribed S-NSSAI (corresponding to the second column 402 of figure 4)
- Optionally a list of TAIs (Tracking Area Identities) for which slice-specific authentication and authorization is to be performed (corresponding to the fourth column 404 of figure 4)
- Indication of slice-specific re-authentication and re-authorization per Subscribed S-NSSAI (corresponding to the third column 403 of figure 4)
- Optionally a list of TAIs (Tracking Area Identities) for which slice-specific re-authentication and re-authorization is to be performed (corresponding to the fifth column 405 of figure 4).

It should be noted that the above parameters are not exhaustive list of parameters being included in the Nudm_SDM_Get response 504, there can be more parameters.

It should be noted that 503 and 504 may correspond to 308 and 309.

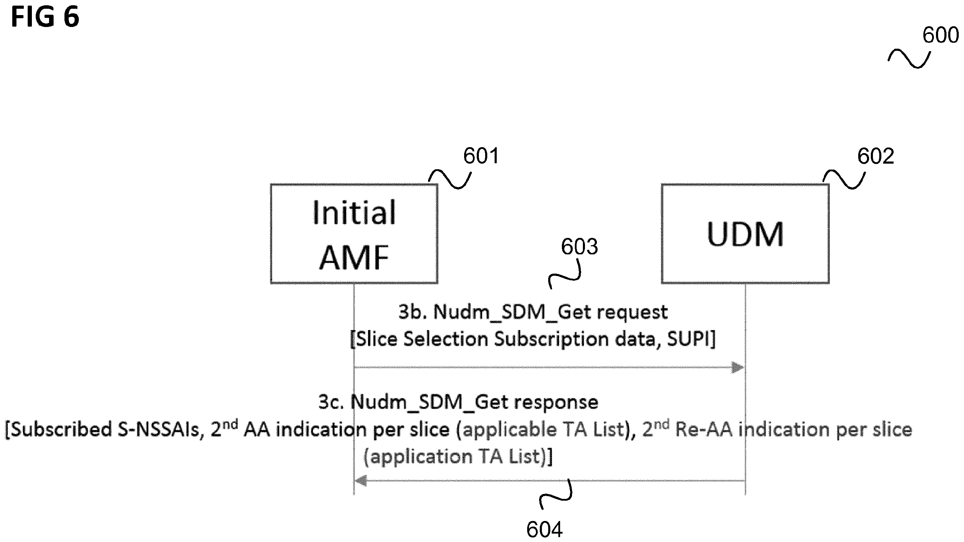

Figure 6 shows a message flow diagram 600 illustrating a UE subscription retrieval by an AMF in course of a registration procedure with AMF re-allocation.

An AMF 601, e.g. corresponding to the AMF 303 of figure 3 and a UDM 602, e.g. corresponding to UDM 304 of figure 3, are involved in the message flow.

The AMF may be an initial AMF in a registration procedure, i.e. an AMF initially assigned to serve a UE to be registered. In this example, it is assumed that an AMF re-allocation is to be performed, i.e. another AMF should serve the UE.

In 603, the AMF 601 sends a Nudm_SDM_Get request message to the UDM 602. The Nudm_SDM_Get request message 603 includes slice selection subscription data type as well as the UE's SUPI (Subscription Concealed Identifier).

In 604, the UDM 602 responds with a Nudm_SDM_Get response 604.

In the Nudm_SDM_Get response 604, the UDM 602 provides
- Subscribed S-NSSAIs (corresponding to the first column 401 of figure 4)
- Indication of slice-specific authentication and authorization per Subscribed S-NSSAI (corresponding to the second column 402 of figure 4)
- Optionally a list of TAIs (Tracking Area Identities) for which slice-specific authentication and authorization is to be performed (corresponding to the fourth column 404 of figure 4)
- Indication of slice-specific re-authentication and re-authorization per Subscribed S-NSSAI (corresponding to the third column 403 of figure 4)
- Optionally a list of TAIs (Tracking Area Identities) for which slice-specific re-authentication and re-authorization is to be performed (corresponding to the fifth column 405 of figure 4).

It should be noted that the above parameters are not exhaustive list of parameters being included in the Nudm_SDM_Get response 504, there can be more parameters.

It should be noted that 603 and 604 may correspond to 308 and 309.

As an alternative to retrieving the secondary authentication and authorization decision information from the UDM, the AMF may have a local configuration and/or an operator's policy stored (provided via OAM (Operation, Administration and Management)for example) indicating whether re-authentication and re-authorization is needed or not for a UE, and if needed it may be configured for the whole PLMN or for a certain location (certain registration area or tracking) or for a certain circumstances/events (e.g., every Registration mobility update). Further, the secondary authentication and authorization decision information may, instead of indicating whether a secondary authentication and authorization is to be performed for a specific location or a specific circumstance/event, indicate that a secondary authentication and authorization is to be performed based on the a mobility event. For example, re-authentication and re-authorization is to be performed for a certain slice for every mobility or periodic registration update procedure performed for the UE.

According to various embodiments, secondary authentication and authorization may be triggered by the AUSF 114 or an AAA server 207. For this, the AUSF or AAA server may subscribe to a location reporting event in the AMF, so that the AUSF or AAA-server can decide whether re-authentication and re-authorization is needed depending on local configuration and/or policies available at the AUSF or AAA-server.

The AUSF or AAA server may have a local configuration and/or operator's policy indicating whether re-authentication and re-authorization is needed or not, and if needed it may be configured when to trigger slice-specific (re-)authentication and (re-)authorization, e.g., once a day.

In one embodiment, the AAA server (considered as application function AF) sends a request to subscribe to an event in an NEF (network Exposure Function), which then further subscribes to a location reporting event of the UE in the AMF via the UDM. By doing so, the AAA server can get a UE's location information from the AMF via the UDM, and hence can decide whether to trigger slice-specific re-authentication and re-authorization depending on the local configuration and/or policies available at the AAA-server.

The third party (e.g. an enterprise) may request the operator to change the secondary authentication and authorization decision information, e.g. the settings of location-based slice-specific (re-)authentication and (re-)authorization or e.g. an indication of re-authentication and re-authorization including location(s) to perform re-authentication and re-authorization. For example, the third party could do this by using an Nnef_ParameterProvision service operation or by using OAM.

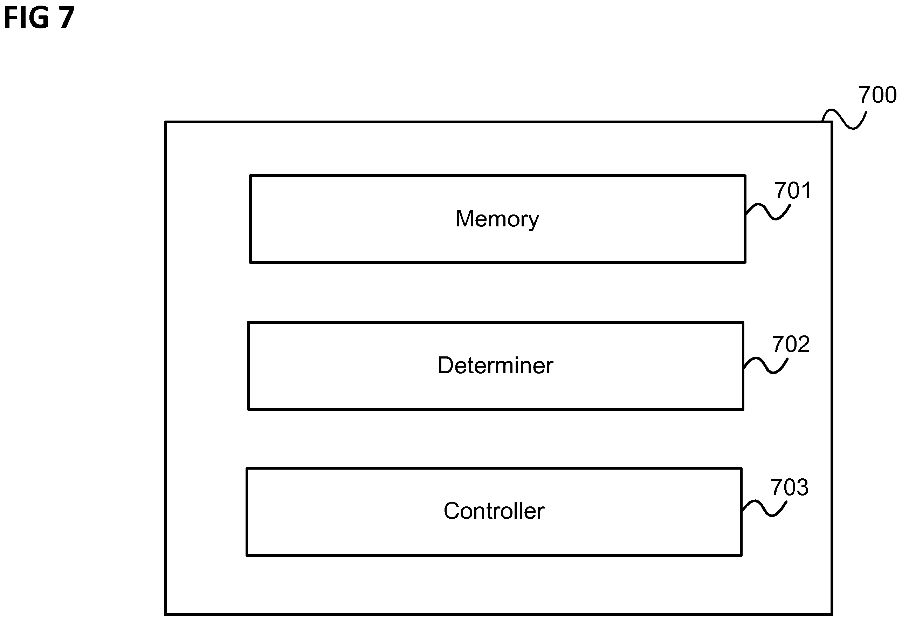

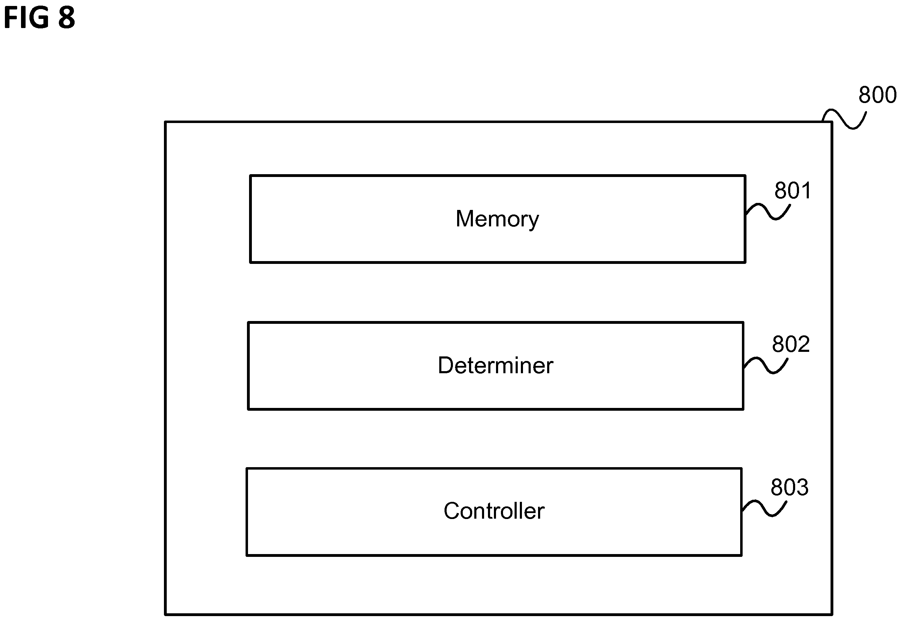

In summary, according to various embodiments, a communication network components are provided as illustrated in figures 7 and 8.

Figure 7 shows a mobile communication network component 700 according to an embodiment.

The mobile communication network component 700 includes a memory 701 configured to store information indicating whether slice-specific re-authentication and re-authorization is to be performed for a mobile terminal.

The mobile communication network component 700 further includes a determiner 702 configured to determine, based on the stored information, whether for a mobile terminal a slice-specific re-authentication and re-authorization is to be performed.

Further, the mobile communication network component 700 includes a controller 703 configured to initiate a slice-specific re-authentication and re-authorization if the determiner determines that a slice-specific re-authentication and re-authorization is to be performed.

According to various embodiments, in other words, information indicating whether slice-specific re-authentication and re-authorization is to be performed for a mobile terminal (which may or may not be location and/or circumstances and/or time dependent) is stored.

Figure 8 shows a mobile communication network component 800 according to another embodiment.

The mobile communication network component 800 includes a memory 801 configured to store information indicating whether for a mobile terminal slice-specific authentication and authorization is to be performed, wherein the information specifies a dependency on location and/or circumstance and/or time of whether a slice-specific authentication and authorization is to be performed for the mobile terminal.

The mobile communication network component 800 further includes a determiner 802 configured to determine whether for a mobile terminal a slice-specific authentication and authorization is to be performed based on the stored information.

Further, the mobile communication network component 800 includes a controller 803 configured to initiate a slice-specific authentication and authorization if the determiner determines that a slice-specific authentication and authorization is to be performed.

According to various embodiments, in other words, information may be stored whether for a mobile terminal a slice-specific authentication and authorization is to be performed, wherein whether a slice-specific authentication and authorization is to be performed is location and/or time dependent. It is determined whether slice-specific authentication and authorization based on a location and/or circumstance and/or time-dependent criterion.

The communication network components 700, 800 (e.g. PLMN components) may for example be AMFs but may also be AAA servers, AUSFs etc. The indication may for example be stored by an UDM for retrieval by the communication network component 700, 800. It should be noted that figure 7 relates to a secondary re-authentication and re-authorization while figure 8 relates in general to a secondary authentication and authorization (which may be a first secondary authentication and authorization or a re-authentication and re-authorization). To indicate (or emphasize) that both a first secondary authentication and authorization and a re-authentication and re-authorization are meant to be included, the term "(re-)authentication and (re-)authorization" is also used herein.

The information stored and used as a basis whether to perform secondary (re-)authentication and (re-)authorization of figures 7 and 8 can be seen as secondary authentication and authorization decision information (or secondary authentication and authorization criterion information, secondary authentication and authorization determination information or secondary authentication and authorization control information). It is not necessary that the secondary authentication and authorization decision information is permanently stored in the communication network component but it can also be retrieved (e.g. from a subscription profile stored in a UDM) when it is required and temporarily stored in the communication network component for performing the decision, i.e. the determination, whether to initiate secondary (re-)authentication and (re-) authorization.

It should be noted that the approaches of figures 7 and 8 may be combined, i.e. secondary authentication and authorization decision information may be taken into account relating to a (first) secondary authentication and authorization and (in addition) secondary authentication and authorization decision information may be taken into account relating to a secondary re-authentication and re-authorization, wherein the secondary authentication and authorization decision information relating to a (first) secondary authentication and authorization (i.e. to a secondary authentication and authorization in general) represents a location and/or time dependency of whether a secondary authentication and authorization is to be performed.

In particular, approaches are described to perform slice-specific authentication and authorization by taking into account the UE's location and/or circumstance (or event) and/or slice-specific re-authentication and re-authorization triggered by a change of a UE's location, e.g. by taking into account an SLA between an operator and a third-party, which may consider the UE's location or time as well. This gives more flexibility for the operator and for the third party to configure where the slice-specific re-authentication and re-authorization in its network is needed. For example, the operator or the third party may set secondary authentication and authorization decision information (e.g. to configure where slice-specific (re-)authentication and (re-)authorization in its network is needed) by changing subscription information or a local configuration (e.g. of an AMF or AAA server) accordingly.

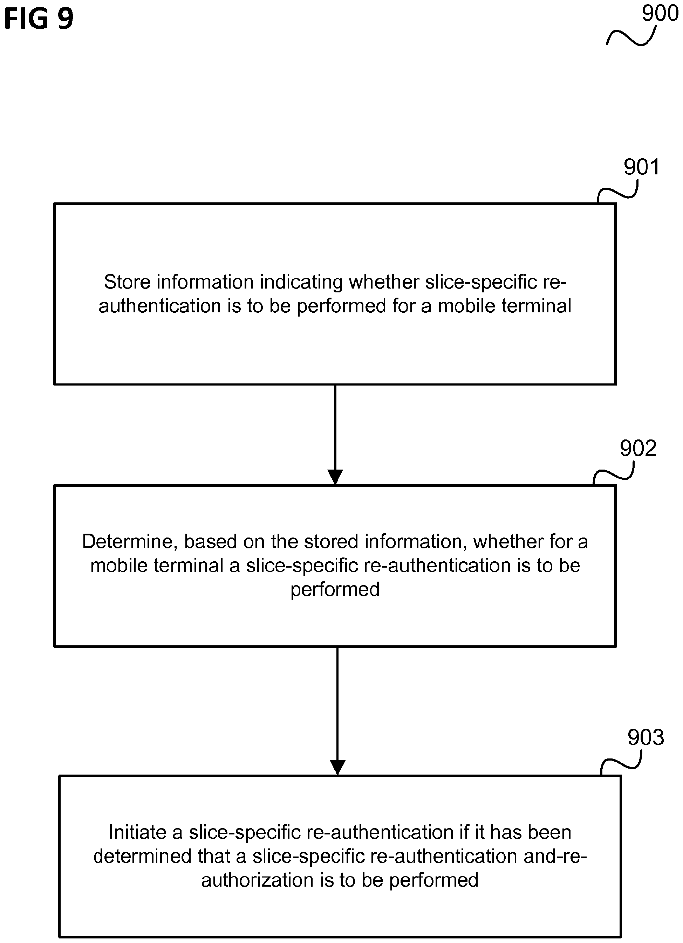

The communication network component 700 for example carries out a method as illustrated in figure 9.

Figure 9 shows a flow diagram 900 illustrating a method for initiating a slice-specific re-authentication and re-authorization.

In 901, information indicating whether slice-specific re-authentication and re-authorization is to be performed for a mobile terminal is stored.

In 902, it is determining, based on the stored information, whether for a mobile terminal a slice-specific re-authentication and re-authorization is to be performed.

In 903, a slice-specific re-authentication and re-authorization is initiated if it has been determined that a slice-specific re-authentication and re-authorization is to be performed.

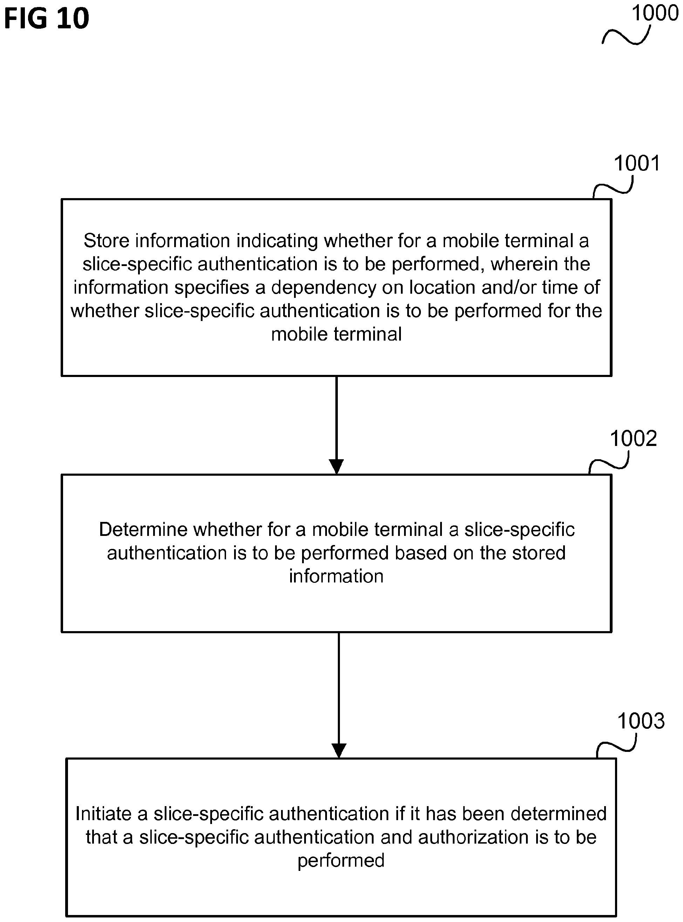

The communication network component 800 for example carries out a method as illustrated in figure 10.

Figure 10 shows a flow diagram 1000 illustrating a method for initiating a slice-specific authentication and authorization.

In 1001, information indicating whether for a mobile terminal slice-specific authentication and authorization is to be performed is stored, wherein the information specifies a dependency on location and/or circumstance (event) and/or time of whether a slice-specific authentication and authorization is to be performed for the mobile terminal.

In 1002, it is determined, based on the stored information, whether for a mobile terminal a slice-specific authentication and authorization is to be performed.

In 1003, a slice-specific authentication and authorization is initiated if it has been determined that a slice-specific authentication and authorization is to be performed.

The parts of the mobile communication network components (in particular the respective memory, the respective determiner and the respective controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

According to a various embodiments, a method for a communication network to perform a slice-specific authentication and authorization by a AAA server is provided, wherein the method includes that
- a UE requests an access to one or more network slice(s),
- a (first) network function (NF) stores a UE subscription profile, wherein the UE's subscription profile includes
   ∘ a list of subscribed network slices, for which the UE has a subscription; and
   ∘ an indication of slice-specific authentication and authorization to perform; and
- an NF (the same NF as the first or a second NF) stores a configuration or policy which includes (or the subscription profile further includes)
   ∘ a list of locations (e.g. a TA list), for which the slice-specific authentication and authorization is required; and/or
   ∘ an indication that slice-specific re-authentication and re-authorization is to be performed for every registration procedure; and/or
   ∘ an indication that slice-specific re-authentication and re-authorization is to be performed ; and/or
   ∘ a list of locations (e.g. a TAI list), for which slice-specific re-authentication and re-authorization is required.
- an NF (the same NF as the first or the second or a third NF) triggers a slice-specific authentication and authorization or a slice-specific (re-)authentication and (re-)authorization based on a UE subscription profile and/or the configuration and/or the policy.

An indication whether to perform secondary (re-)authentication and (re-)authorization can be coded with different values to allow different variants of performing the slice-specific authentication and authorization, e.g., whether to perform just once, or to always perform whenever the UE sends a registration request due to a change of the UE's location or to perform secondary (re-)authentication and (re-)authorization by taking into account whether for the UE's location the slice-specific (re-)authentication and (re-)authorization is required.

## Claims

1. A mobile communication network component (700) comprising:
a memory (701) configured to store information indicating whether network slice-specific re-authentication and re-authorization is to be performed for a mobile terminal;
a determiner (702) configured to determine, based on the stored information, whether for a mobile terminal a network slice-specific re-authentication and re-authorization is to be performed; and
a controller (703) configured to initiate a network slice-specific re-authentication and re-authorization if the determiner determines that a network slice-specific re-authentication and re-authorization is to be performed;
**characterised in that** the determiner is configured determine whether network slice-specific re-authentication and re-authorization is to be performed for the mobile terminal based on a location of the mobile terminal.

2. The mobile communication network component of claim 1, comprising a transmitter configured to request the information from a database, in particular a Unified Data Management.

3. The mobile communication network component of claim 2,
wherein the database stores subscription information including the information.

4. The mobile communication network component of claim 2 or 3, wherein the transmitter is configured to requesting subscription information of the mobile terminal and extracting the information from the subscription information.

5. The mobile communication network component of any of claims 1 to 4, configured to implement a network function of a mobile communication network.

6. The mobile communication network component of claim 5, being implemented by a server computer of the communication network, in particular an Access and Mobility Management Function or an authentication and authorization server or Authentication and authorization Server Function.

7. The mobile communication network component of any of claims 1 to 6, wherein the information whether for a mobile terminal network slice-specific re-authentication and re-authorization is to be performed specifies whether for the mobile terminal network slice-specific re-authentication and re-authorization is to be performed dependent on location.

8. The mobile communication network component of any of claims 1 to 7, wherein the information includes a list of locations where network slice-specific re-authentication and re-authorization is to be performed for the mobile terminal and/or a list of locations where network slice-specific re-authentication and re-authorization is not to be performed for the mobile terminal.

9. A method (900) for initiating a network slice-specific re-authentication and re-authorization comprising:
storing information (901) indicating whether network slice-specific re-authentication and re-authorization is to be performed for a mobile terminal;
determining (902), based on the stored information, whether for a mobile terminal a network slice-specific re-authentication and re-authorization is to be performed; and
initiating (903) a network slice-specific re-authentication and re-authorization if it has been determined that a network slice-specific re-authentication and re-authorization is to be performed;
**characterised in that** the method further comprises determining whether network slice-specific re-authentication and re-authorization is to be performed for the mobile terminal based on a location of the mobile terminal.

## Patentansprüche

1. Eine Mobilkommunikationsnetzkomponente (700), aufweisend:
einen Speicher (701), der so konfiguriert ist, dass er Information speichert, die anzeigt, ob für ein mobiles Endgerät eine Netzwerk-Slice-spezifische Re-Authentifizierung und Re-Autorisierung durchgeführt werden soll;
eine Bestimmungseinrichtung (702), die so konfiguriert ist, dass sie auf der Grundlage der gespeicherten Information bestimmt, ob für ein mobiles Endgerät eine Netzwerk-Slice-spezifische Re-Authentifizierung und Re-Autorisierung durchgeführt werden soll; und
eine Steuereinrichtung (703), die so konfiguriert ist, dass sie eine Netzwerk-Slice-spezifische Re-Authentifizierung und Re-Autorisierung initiiert, wenn die Bestimmungseinrichtung bestimmt, dass eine Netzwerk-Slice-spezifische Re-Authentifizierung und Re-Autorisierung durchgeführt werden soll;
dadurch charakterisiert, dass
die Bestimmungseinrichtung so konfiguriert ist, dass sie auf der Grundlage eines Standorts des mobilen Endgeräts bestimmt, ob eine Netzwerk-Slice-spezifische Re-Authentifizierung und Re-Autorisierung für das mobile Endgerät durchgeführt werden soll.

2. Die Mobilkommunikationsnetzkomponente nach Anspruch 1, aufweisend einen Sender, der so konfiguriert ist, dass er die Information von einer Datenbank, insbesondere einem Unified Data Management, anfordert.

3. Die Mobilkommunikationsnetzkomponente nach Anspruch 2, wobei die Datenbank Subskriptionsinformation speichert, die die Information enthält.

4. Die Mobilkommunikationsnetzkomponente nach Anspruch 2 oder 3, wobei der Sender so konfiguriert ist, dass er Subskriptionsinformation des mobilen Endgeräts anfordert und die Information aus der Subskriptionsinformation extrahiert.

5. Die Mobilkommunikationsnetzkomponente nach einem der Ansprüche 1 bis 4, die so konfiguriert ist, dass sie eine Netzwerk-Funktion eines Mobilkommunikationsnetzes implementiert.

6. Die Mobilkommunikationsnetzkomponente nach Anspruch 5, die von einem Servercomputer des Kommunikationsnetzes implementiert wird, insbesondere einer Zugangs- und Mobilitätsmanagementfunktion oder einem Authentifizierungs- und Autorisierungsserver oder einer Authentifizierungs- und Autorisierungsserverfunktion.

7. Die Mobilkommunikationsnetzkomponente nach einem der Ansprüche 1 bis 6, wobei die Information, ob für ein mobiles Endgerät eine Netzwerk-Slice-spezifische Re-Authentifizierung und Re-Autorisierung durchgeführt werden soll, angibt, ob für das mobile Endgerät eine Netzwerk-Slice-spezifische Re-Authentifizierung und Re-Autorisierung in Abhängigkeit vom Standort durchgeführt werden soll.

8. Die Mobilkommunikationsnetzkomponente nach einem der Ansprüche 1 bis 7, wobei die Information eine Liste von Orten, an denen eine Netzwerk-Slice-spezifische Re-Authentifizierung und Re-Autorisierung für das mobile Endgerät durchgeführt werden soll, und/oder eine Liste von Orten enthält, an denen eine Netzwerk-Slice-spezifische Re-Authentifizierung und Re-Autorisierung für das mobile Endgerät nicht durchgeführt werden soll.

9. Ein Verfahren (900) zum Initiieren einer Netzwerk-Slice-spezifischen Re-Authentifizierung und Re-Autorisierung, aufweisend:
Speichern von Information (901), die anzeigt, ob eine Netzwerk-Slice-spezifische Re-Authentifizierung und Re-Autorisierung für ein mobiles Endgerät durchgeführt werden soll;
Bestimmen (902), auf der Grundlage der gespeicherten Information, ob für ein mobiles Endgerät eine Netzwerk-Slice-spezifische Re-Authentifizierung und Re-Autorisierung durchgeführt werden soll; und
Initiieren (903) einer Netzwerk-Slice-spezifischen Re-Authentifizierung und Re-Autorisierung, wenn bestimmt wurde, dass eine Netzwerk-Slice-spezifische Re-Authentifizierung und Re-Autorisierung durchgeführt werden soll;
dadurch charakterisiert, dass das Verfahren ferner aufweist
Bestimmen, auf der Grundlage eines Standorts des mobilen Endgeräts, ob eine Netzwerk-Slice-spezifische Re-Authentifizierung und Re-Autorisierung für das mobile Endgerät durchgeführt werden soll.

## Revendications

1. Composant de réseau de communication mobile (700) comprenant :
une mémoire (701) conçue pour stocker des informations indiquant si une ré-authentification et une ré-autorisation spécifiques à une tranche de réseau doivent être exécutées ou non pour un terminal mobile ;
un dispositif de détermination (702) conçu pour déterminer, sur la base des informations stockées si, pour un terminal mobile, une ré-authentification et une ré-autorisation spécifiques à une tranche de réseau doivent être exécutées ou non ; et
un dispositif de commande (703) conçu pour initier une ré-authentification et une ré-autorisation spécifiques à une tranche de réseau si le dispositif de détermination détermine qu'une ré-authentification et une ré-autorisation spécifiques à une tranche de réseau doivent être exécutées ;
**caractérisé en ce que** le dispositif de détermination est conçu pour déterminer si une ré-authentification et une ré-autorisation spécifiques à une tranche de réseau doivent être exécutées ou non pour le terminal mobile sur la base d'un emplacement du terminal mobile.

2. Composant de réseau de communication mobile selon la revendication 1, comprenant un émetteur conçu pour demander les informations à une base de données, en particulier une gestion de données unifiées.

3. Composant de réseau de communication mobile selon la revendication 2, dans lequel la base de données stocke des informations d'abonnement comprenant les informations.

4. Composant de réseau de communication mobile selon la revendication 2 ou 3, dans lequel l'émetteur est conçu pour demander des informations d'abonnement du terminal mobile et pour extraire les informations des informations d'abonnement.

5. Composant de réseau de communication mobile selon l'une quelconque des revendications 1 à 4, conçu pour mettre en oeuvre une fonction réseau d'un réseau de communication mobile.

6. Composant de réseau de communication mobile selon la revendication 5, mis en oeuvre par un ordinateur serveur du réseau de communication, en particulier une fonction de gestion d'accès et de mobilité ou un serveur d'authentification et d'autorisation ou une fonction de serveur d'authentification et d'autorisation.

7. Composant de réseau de communication mobile selon l'une quelconque des revendications 1 à 6, dans lequel les informations selon lesquelles, pour un terminal mobile, une ré-authentification et une ré-autorisation spécifiques à une tranche de réseau doivent être exécutées ou non, indiquent si, pour le terminal mobile, une ré-authentification et une ré-autorisation spécifiques à une tranche de réseau doivent être exécutées ou non en fonction de l'emplacement.

8. Composant de réseau de communication mobile selon l'une quelconque des revendications 1 à 7, dans lequel les informations comprennent une liste d'emplacements où une ré-authentification et une ré-autorisation spécifiques à une tranche de réseau doivent être exécutées pour le terminal mobile et/ou une liste d'emplacements où une ré-authentification et une ré-autorisation spécifiques à une tranche de réseau ne doivent pas être exécutées pour le terminal mobile.

9. Procédé (900) d'initiation d'une ré-authentification et d'une ré-autorisation spécifiques à une tranche de réseau comprenant :
le stockage d'informations (901) indiquant si une ré-authentification et une ré-autorisation spécifiques à une tranche de réseau doivent être exécutées ou non pour un terminal mobile ;
la détermination (902), sur la base des informations stockées, selon laquelle une ré-authentification et une ré-autorisation spécifiques à une tranche de réseau doivent être exécutées ou non pour un terminal mobile ; et
l'initiation (903) d'une ré-authentification et d'une ré-autorisation spécifiques à une tranche de réseau, s'il a été déterminé qu'une ré-authentification et une ré-autorisation spécifiques à une tranche de réseau doivent être exécutées ;
**caractérisé en ce que** le procédé comprend en outre la détermination selon laquelle une ré-authentification et une ré-autorisation spécifiques à une tranche de réseau doivent être exécutées ou non pour le terminal mobile sur la base d'un emplacement du terminal mobile.
